# EUROPÄISCHE PATENTANMELDUNG

(11) **EP 4 060 131 A1**
(43) Veröffentlichungstag der Anmeldung: **21.09.2022**
(21) Anmeldenummer: 22161586.7
(22) Anmeldetag: 11.03.2022
(51) Int. Cl.: E03C 1/02, F16K 11/044, E03C 1/04

(54) **UMSTELLVENTIL FÜR EINE SANITÄRARMATUR SOWIE SANITÄRARMATUR MIT EINEM SOLCHEN UMSTELLVENTIL**

(30) Priorität: 17.03.2021 DE 102021106446
(71) Anmelder: Grohe AG, 58675 Hemer (DE)
(72) Erfinder: Krönke, Markus, 58809 Neuenrade (DE)

(57) **Zusammenfassung**

Umstellventil (1) für eine Sanitärarmatur (2), zumindest aufweisend:
- ein Ventilgehäuse (3) mit einem Flüssigkeitszulauf (4), einem ersten Flüssigkeitsablauf (5) und einem zweiten Flüssigkeitsablauf (6), wobei der Flüssigkeitszulauf (4) über einen ersten Flüssigkeitskanal (7) mit dem ersten Flüssigkeitsablauf (5) und über einen zweiten Flüssigkeitskanal (8) mit dem zweiten Flüssigkeitsablauf (6) verbunden ist; und
- einen Ventilkörper (9), der in dem Ventilgehäuse (3) zwischen einer ersten Schließstellung (10) und einer zweiten Schließstellung (11) verstellbar ist, wobei in der ersten Schließstellung (10) eine Umfangsfläche (12) des Ventilkörpers (9) den ersten Flüssigkeitskanal (7) verschließt und wobei in der zweiten Schließstellung (11) eine Stirnfläche (13) des Ventilkörpers (9) den zweiten Flüssigkeitskanal (8) verschließt.

Zudem wird eine Sanitärarmatur (2) mit einem solchen Umstellventil (1) vorgeschlagen.

## Beschreibung

Die vorliegende Erfindung betrifft ein Umstellventil für eine Sanitärarmatur und eine Sanitärarmatur mit einem solchen Umstellventil. Umstellventile dienen der Umstellung eines Flüssigkeitsflusses zwischen mehreren Flüssigkeitsabgabestellen, wie zum Beispiel Brausen, Kopfbrausen, Handbrausen, Wannenausläufen und/oder Strahlbildnern, und sind häufig Bestandteil einer Sanitärarmatur, wie zum Beispiel eines Unterputzeinbaukörpers. Unterputzeinbaukörper sind innerhalb eines Mauerdurchbruchs, einer Öffnung in einer Wand oder einem sonstigen Träger befestigbar. Insbesondere bei Einbauwänden und Vorwandsystemen haben sich solche Unterputzeinbaukörper bewährt.

Unterputzeinbaukörper dienen der Befestigung einer Funktionseinheit in einer Mauer, Gebäudewand oder einem Träger. Die Funktionseinheit kann einen Mischer, wie zum Beispiel ein Mischventil, eine Mischkartusche oder Thermostatkartusche, und/oder ein Umstellventil umfassen. Mittels des Mischers sind Kaltwasser und Warmwasser zu einem Mischwasser mit einer gewünschten Mischwassertemperatur mischbar, wobei eine Entnahmemenge des Mischwassers mittels des Mischers steuerbar sein kann. Durch das Umstellventil ist das Mischwasser anschließend wahlweise einer ersten Flüssigkeitsabgabestelle, wie zum Beispiel dem Wannenauslauf einer Badewanne, oder einer zweiten Flüssigkeitsabgabestelle, wie zum Beispiel der Brause, zuführbar. Nachteilig an den bekannten Umstellventilen ist, dass diese, beispielsweise durch komplexe Strömungswege, hohe Druckverluste und/oder laute Strömungsgeräusche erzeugen.

Aufgabe der Erfindung ist daher, die mit Bezug auf den Stand der Technik geschilderten Probleme zumindest teilweise zu lösen und insbesondere ein Umstellventil für eine Sanitärarmatur anzugeben, mit dem Druckverluste und/oder Strömungsgeräusche reduzierbar sind. Zudem soll auch eine Sanitärarmatur angegeben werden, durch dessen Umstellventil Druckverluste und/oder Strömungsgeräusche reduzierbar sind.

Diese Aufgaben werden gelöst mit einem Umstellventil und einer Sanitärarmatur gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Umstellventil für eine Sanitärarmatur bei, das zumindest Folgendes aufweist:
- ein Ventilgehäuse mit einem Flüssigkeitszulauf, einem ersten Flüssigkeitsablauf und einem zweiten Flüssigkeitsablauf, wobei der Flüssigkeitszulauf über einen ersten Flüssigkeitskanal mit dem ersten Flüssigkeitsablauf und über einen zweiten Flüssigkeitskanal mit dem zweiten Flüssigkeitsablauf verbunden ist; und
- einen Ventilkörper, der in dem Ventilgehäuse zwischen einer ersten Schließstellung und einer zweiten Schließstellung verstellbar ist, wobei in der ersten Schließstellung eine Umfangsfläche des Ventilkörpers den ersten Flüssigkeitskanal verschließt und wobei in der zweiten Schließstellung eine Stirnfläche des Ventilkörpers den zweiten Flüssigkeitskanal verschließt.

Das Umstellventil ist insbesondere für Sanitärarmaturen verwendbar, die insbesondere einer bedarfsgerechten Bereitstellung einer Flüssigkeit, insbesondere Wasser, an einem Waschbecken, Spülbecken, Dusche und/oder Badewanne dienen. Durch die Sanitärarmatur ist insbesondere Kaltwasser mit einer Kaltwassertemperatur und Warmwasser mit einer Warmwassertemperatur zu einem Mischwasser mit einer gewünschten Mischwassertemperatur mischbar. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Hierzu kann die Sanitärarmatur beispielsweise einen Mischer, wie zum Beispiel ein Mischventil, eine Mischkartusche oder Thermostatkartusche, aufweisen.

Die Sanitärarmatur kann ein Armaturengehäuse aufweisen, wobei das Armaturengehäuse zumindest teilweise aus Kunststoff, Keramik und/oder Metall, wie zum Beispiel Messing oder einer Zinklegierung, bestehen kann. Weiterhin kann das Armaturengehäuse an einem Träger, beispielsweise einer Gebäudewand, Arbeitsplatte, dem Spülbecken, dem Waschbecken oder der Badewanne, befestigbar sein. Zudem kann das Armaturengehäuse einen (hervorstehenden bzw. abzweigenden) Auslauf aufweisen, der starr oder bewegbar mit dem Armaturengehäuse verbunden ist. Der Auslauf kann zumindest teilweise rohrförmig ausgebildet sein. Weiterhin kann das Armaturengehäuse und/oder der Auslauf eine dekorative äußere Oberfläche aufweisen. Weiterhin kann der Auslauf eine Mehrzahl von Strahlbildnern aufweisen, durch die die Flüssigkeit in unterschiedlichen Strahlarten abgebbar ist.

Die Sanitärarmatur kann nach Art eines Unterputzeinbaukörpers ausgebildet sein. Solche Unterputzeinbaukörper sind insbesondere (unter Putz) in einer Mauer, Gebäudewand oder an einem Träger anordenbar. Im Falle des Unterputzeinbaukörpers kann das Armaturengehäuse beispielsweise zumindest teilweise rohrförmig ausgebildet sein und/oder zumindest einen Aufnahmeraum, beispielsweise für die Funktionseinheit, bilden. Durch das Umstellventil ist die Flüssigkeit bzw. das Mischwasser einer Mehrzahl von Flüssigkeitsabgabestellen, wie zum Beispiel Brausen, Kopfbrausen, Handbrausen, Wannenausläufen und/oder Strahlbildnern, zuführbar. Insbesondere ist die Flüssigkeit bzw. das Mischwasser durch das Umstellventil (wahlweise) einer ersten Flüssigkeitsabgabestelle, beispielsweise einem Wannenauslauf einer Badewanne, oder zweiten Flüssigkeitsabgabestelle, beispielsweise einer Brause der Badewanne, zuführbar. Die Zuführung kann beispielsweise zumindest teilweise über eine Rohrleitung und/oder Schlauchleitung erfolgen.

Das Umstellventil weist ein Ventilgehäuse auf, das zumindest teilweise aus Kunststoff und/oder Metall, wie zum Beispiel Messing, Keramik oder Edelstahl, bestehen kann. Weiterhin kann das Ventilgehäuse zumindest teilweise als Gussbauteil oder Rohrbauteil ausgebildet sein. Zudem kann das Ventilgehäuse mehrteilig ausgebildet sein. Darüber hinaus kann das Ventilgehäuse T-förmig ausgebildet sein. Das Ventilgehäuse weist einen Flüssigkeitszulauf auf, über den dem Umstellventil die Flüssigkeit zuführbar ist. Weiterhin weist das Ventilgehäuse einen ersten Flüssigkeitsablauf und einen zweiten Flüssigkeitsablauf auf, über die die Flüssigkeit abgebbar ist. Der Flüssigkeitszulauf, der erste Flüssigkeitsablauf und/oder der zweite Flüssigkeitsablauf können mit einer Rohrleitung und/oder Schlauchleitung verbindbar sein. Hierzu können der Flüssigkeitszulauf, der erste Flüssigkeitsablauf und/oder der zweite Flüssigkeitsablauf beispielsweise ein Gewinde aufweisen. Der Flüssigkeitszulauf ist insbesondere mit dem Mischer, der erste Flüssigkeitsablauf mit der ersten Flüssigkeitsabgabestelle und/oder der zweite Flüssigkeitsablauf mit der zweiten Flüssigkeitsabgabestelle verbindbar. Der Flüssigkeitszulauf ist über einen ersten Flüssigkeitskanal mit dem ersten Flüssigkeitsablauf und über einen zweiten Flüssigkeitskanal mit dem zweiten Flüssigkeitsablauf verbunden. Der erste Flüssigkeitskanal und/oder der zweite Flüssigkeitskanal erstrecken sich insbesondere (vollständig) durch das Ventilgehäuse und/oder können nach Art einer Bohrung ausgebildet sein. Weiterhin können sich der erste Flüssigkeitskanal entlang einer, insbesondere geraden, ersten Längsachse und/oder der zweite Flüssigkeitskanal entlang einer, insbesondere geraden, zweiten Längsachse erstrecken. Bei der ersten und/oder zweiten Längsachse kann es sich insbesondere um eine Zentrumsachse handeln. Der erste Flüssigkeitskanal kann beispielsweise einen ersten Innendurchmesser von 4mm (Millimeter) bis 30 mm und/oder der zweite Flüssigkeitskanal beispielsweise einen zweiten Innendurchmesser von 4 mm (Millimeter) bis 30 mm aufweisen. Der erste Flüssigkeitskanal erstreckt sich insbesondere von dem Flüssigkeitszulauf bis zu dem ersten Flüssigkeitsablauf. Der zweite Flüssigkeitskanal erstreckt sich insbesondere von dem ersten Flüssigkeitskanal bis zu dem zweiten Flüssigkeitsablauf. Dies kann insbesondere bedeuten, dass der zweite Flüssigkeitskanal von dem ersten Flüssigkeitskanal abzweigt und/oder der zweite Flüssigkeitskanal über eine erste Innenwand des ersten Flüssigkeitskanals in den ersten Flüssigkeitskanal mündet. Weiterhin kann dies insbesondere bedeuten, dass der erste Flüssigkeitskanal und der zweite Flüssigkeitskanal T-förmig ausgebildet sind.

Darüber hinaus weist das Umstellventil einen Ventilkörper auf, der in dem Ventilgehäuse zwischen einer ersten Schließstellung und einer zweiten Schließstellung verstellbar ist. Der Ventilkörper kann insbesondere zumindest teilweise nach Art eines Kolbens und/oder Schiebers ausgebildet sein. Dies kann beispielsweise bedeuten, dass der Ventilkörper, insbesondere im Bereich einer Stirnfläche, einen runden oder mehreckigen Querschnitt aufweist. Der Ventilkörper erstreckt sich insbesondere entlang der zweiten Längsachse des zweiten Flüssigkeitskanals. Dies kann auch bedeuten, dass der Ventilkörper koaxial zu dem zweiten Flüssigkeitskanal ausgebildet ist. Die Stirnfläche des Ventilkörpers ist insbesondere an einem ersten längsseitigen Ende des Ventilkörpers und/oder orthogonal zu der zweiten Längsachse des zweiten Flüssigkeitskanals ausgebildet. Weiterhin kann der Ventilkörper im Bereich der Stirnfläche einen Ventilkörperdurchmesser von beispielsweise 4 mm bis 30 mm aufweisen. Der Ventilkörperdurchmesser kann insbesondere (im Wesentlichen) dem zweiten Innendurchmesser des zweiten Flüssigkeitskanals entsprechen. Zudem kann der Ventilkörper, insbesondere parallel zu der zweiten Längsachse des zweiten Flüssigkeitskanals eine Ventilkörperlänge von beispielsweise 4 mm bis 30 mm aufweisen. Der Ventilkörper ist zwischen der ersten Schließstellung und der zweiten Schließstellung insbesondere entlang eines, insbesondere geraden, Stellwegs verstellbar, wobei der Stellweg insbesondere parallel zu der zweiten Längsachse des zweiten Flüssigkeitskanals verläuft. In der ersten Schließstellung verschließt eine Umfangsfläche des Ventilkörpers den ersten Flüssigkeitskanal, sodass über den ersten Flüssigkeitsablauf keine Flüssigkeit abfließen kann. Weiterhin öffnet der Ventilkörper in der ersten Schließstellung den zweiten Flüssigkeitskanal, sodass die Flüssigkeit über den zweiten Flüssigkeitsablauf abfließen kann. Bei der Umfangsfläche des Ventilkörpers kann es sich beispielsweise um eine Fläche handeln, die den Ventilkörper in einer (in Bezug auf den Stellweg des Ventilkörpers und/oder in Bezug auf die zweite Längsachse des zweiten Flüssigkeitskanals) radialen Richtung begrenzt. Weiterhin kann sich die Umfangsfläche parallel zu der zweiten Längsachse des zweiten Flüssigkeitskanals und/oder in eine Umfangsrichtung um die zweite Längsachse des zweiten Flüssigkeitskanals erstrecken. Zudem kann die Umfangsfläche orthogonal zu der Stirnfläche des Ventilkörpers ausgebildet sein. In der zweiten Schließstellung verschließt die Stirnfläche des Ventilkörpers den zweiten Flüssigkeitskanal, sodass über den zweiten Flüssigkeitsablauf keine Flüssigkeit abfließen kann. Weiterhin öffnet der Ventilkörper in der zweiten Schließstellung den ersten Flüssigkeitskanal, sodass die Flüssigkeit über den ersten Flüssigkeitsablauf abfließen kann. In der zweiten Schließstellung ist der Ventilkörper insbesondere vollständig aus dem ersten Flüssigkeitskanal herausbewegt. Weiterhin kann in der zweiten Schließstellung die Stirnfläche des Ventilkörpers insbesondere bündig mit einem dritten längsseitigen Ende des zweiten Flüssigkeitskanals abschließen.

Der erste Flüssigkeitskanal und der zweite Flüssigkeitskanal können in einem Winkel von 45° bis 135° zueinander verlaufen. Insbesondere können der erste Flüssigkeitskanal und der zweite Flüssigkeitskanal in einem Winkel von bevorzugt 80° bis 100°, besonders bevorzugt (im Wesentlichen) 90°, zueinander verlaufen.

Der erste Flüssigkeitsablauf kann parallel zu dem Flüssigkeitszulauf und der zweite Flüssigkeitsablauf orthogonal zu dem Flüssigkeitszulauf ausgebildet sein. Weiterhin kann der erste Flüssigkeitsablauf insbesondere koaxial zu dem Flüssigkeitszulauf ausgebildet sein.

In der ersten Schließstellung kann die Stirnfläche des Ventilkörpers eine erste Innenwand des ersten Flüssigkeitskanals kontaktieren. Insbesondere kann die Stirnfläche des Ventilkörpers in der ersten Schließstellung einen Bereich der ersten Innenwand des ersten Flüssigkeitskanals kontaktieren, der dem zweiten Flüssigkeitskanal gegenüberliegt.

Der Ventilkörper kann beim Verstellen zwischen der ersten Schließstellung und der zweiten Schließstellung parallel zu einem ersten Ventilsitz des ersten Flüssigkeitskanals bewegbar sein. Dies kann insbesondere bedeuten, dass der Ventilkörper bei einer Bewegung aus der ersten Schließstellung in Richtung der zweiten Schließstellung nicht orthogonal von dem ersten Ventilsitz abgehoben wird. Bei dem ersten Ventilsitz kann es sich insbesondere um einen Bereich handeln, den die Umfangsfläche des Ventilkörpers in der ersten Schließstellung kontaktiert.

Der Ventilkörper kann beim Verstellen in Richtung der ersten Schließstellung zumindest teilweise aus dem zweiten Flüssigkeitskanal herausbewegt und beim Verstellen in Richtung der zweiten Schließstellung zumindest teilweise in den zweiten Flüssigkeitskanal hineinbewegt werden. In der zweiten Schließstellung ist der Ventilkörper insbesondere vollständig in dem zweiten Flüssigkeitskanal angeordnet.

Der Ventilkörper kann eine Umlenkkontur aufweisen, durch die in der ersten Schließstellung des Ventilkörpers eine Flüssigkeit in Richtung des zweiten Flüssigkeitskanals umlenkbar ist. Die Kontur kann beispielsweise nach Art einer Ausnehmung und/oder zumindest eines Kanals ausgebildet sein. Die Ausnehmung und/oder der zumindest eine Kanal können sich insbesondere von einem in Richtung des Flüssigkeitszulaufs orientierten Bereich der Umfangsfläche des Ventilkörpers bis zu einem zweiten längsseitigen Ende des Ventilkörpers erstrecken. Weiterhin kann die Umlenkkontur zumindest teilweise konkav und/oder zumindest teilweise in Richtung des zweiten Flüssigkeitskanals bzw. des zweiten Flüssigkeitsablaufs gebogen ausgebildet sein. Weiterhin kann die Umlenkkontur die über den Flüssigkeitszulauf zuströmende Flüssigkeit, insbesondere vollständig, in Richtung des zweiten Flüssigkeitskanals bzw. des zweiten Flüssigkeitsablaufs umlenken.

Der Ventilkörper kann mit einem Betätigungselement verstellbar sein. Das Betätigungselement kann beispielsweise nach Art einer Betätigungsstange ausgebildet sein und/oder sich entlang einer, insbesondere geraden, dritten Längsachse erstrecken. Weiterhin kann das Betätigungselement eine Länge von beispielsweise 10 mm bis 100 mm und/oder einen Durchmesser von 1 mm bis 15 mm aufweisen. Das Betätigungselement ist insbesondere über die Stirnfläche mit dem Ventilkörper verbunden. Hierzu kann der Ventilkörper in der Stirnfläche eine Aufnahme für das Betätigungselement aufweisen, in der das Betätigungselement befestigbar ist. Über das Betätigungselement ist der Ventilkörper insbesondere durch einen Benutzer des Umstellventils bzw. der Sanitärarmatur zwischen der ersten Schließstellung und der zweiten Schließstellung verstellbar. Hierzu kann das Betätigungselement beispielsweise einen Betätigungsgriff aufweisen. Das Betätigungselement kann in einer Führung des Ventilgehäuses geführt sein. Weiterhin kann das Betätigungselement zumindest teilweise aus dem Ventilgehäuse herausragen.

Das Betätigungselement kann exzentrisch an dem Ventilkörper befestigt sein. Dies kann insbesondere bedeuten, dass das Betätigungselement derart an dem Ventilkörper befestigt ist, dass die dritte Längsachse des Betätigungselements einen Abstand zu der zweiten Längsachse des zweiten Flüssigkeitskanals bzw. des Ventilkörpers aufweist. Die exzentrische Befestigung des Betätigungselements an dem Ventilkörper verhindert, dass sich der Ventilkörper in dem zweiten Flüssigkeitskanal um die zweite Längsachse verdreht.

Einem weiteren Aspekt folgend wird auch eine Sanitärarmatur vorgeschlagen, die zumindest Folgendes aufweist:
- ein Armaturengehäuse; und
- ein erfindungsgemäßes Umstellventil, wobei das Umstellventil zumindest teilweise in dem Armaturengehäuse angeordnet ist.

Für weitere Einzelheiten zu der Sanitärarmatur wird vollumfänglich auf die Beschreibung des Ventilkörpers verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Umstellventil für eine Sanitärarmatur mit einem Ventilkörper in einer ersten Schließstellung;
- Fig. 2:: das Umstellventil für die Sanitärarmatur mit dem Ventilkörper in einer zweiten Schließstellung; und
- Fig. 3:: die Sanitärarmatur mit dem Umstellventil.

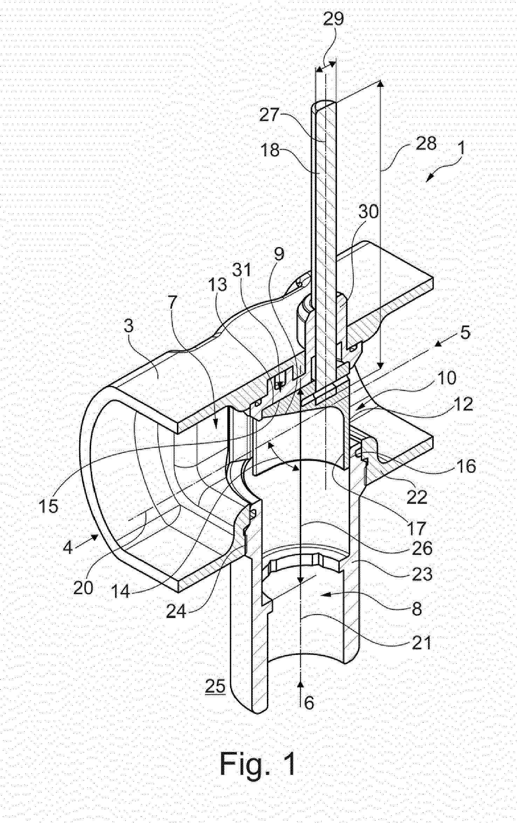

Die Fig. 1 zeigt ein Umstellventil 1 mit einem Ventilgehäuse 3 in einer perspektivischen Darstellung. Das Ventilgehäuse 3 weist einen Flüssigkeitszulauf 4, einen ersten Flüssigkeitsablauf 5 und einen zweiten Flüssigkeitsablauf 6 auf. Der Flüssigkeitszulauf 4 ist über einen ersten Flüssigkeitskanal 7 mit dem ersten Flüssigkeitsablauf 5 verbunden, wobei der erste Flüssigkeitskanal 7 gerade ausgebildet ist und sich entlang einer ersten Längsachse 20 von dem Flüssigkeitszulauf 4 bis zu dem ersten Flüssigkeitsablauf 5 erstreckt. Weiterhin sind der Flüssigkeitszulauf 4 und der erste Flüssigkeitsablauf 5 parallel zueinander und koaxial zueinander ausgebildet. Zudem ist der Flüssigkeitszulauf 4 über einen zweiten Flüssigkeitskanal 8 mit dem zweiten Flüssigkeitsablauf 6 verbunden, wobei der zweite Flüssigkeitskanal 8 gerade ausgebildet ist und sich entlang einer zweiten Längsachse 21 von dem ersten Flüssigkeitskanal 7 bis zu dem zweiten Flüssigkeitsablauf 6 erstreckt. Weiterhin verlaufen der erste Flüssigkeitskanal 7 und der zweite Flüssigkeitskanal 8 in einem Winkel 14 zueinander, der hier 90° entspricht. Der zweite Flüssigkeitsablauf 6 ist orthogonal zu dem Flüssigkeitszulauf 4 und dem ersten Flüssigkeitsablauf 5 ausgebildet. Der erste Flüssigkeitskanal 7 erstreckt sich durch ein erstes Gehäuseteil 22 des Ventilgehäuses 3 und der zweite Flüssigkeitskanal 8 durch ein zweites Gehäuseteil 23 des Ventilgehäuses 3. Das erste Gehäuseteil 22 und das zweite Gehäuseteil 23 sind rohrförmig ausgebildet und derart miteinander verbunden, dass aus einem Spalt 24 zwischen dem ersten Gehäuseteil 22 und zweiten Gehäuseteil 23 keine Flüssigkeit in einer Umgebung 25 des Umstellventils 1 austreten kann. Hierzu kann in dem Spalt eine hier nicht gezeigte Dichtung angeordnet sein.

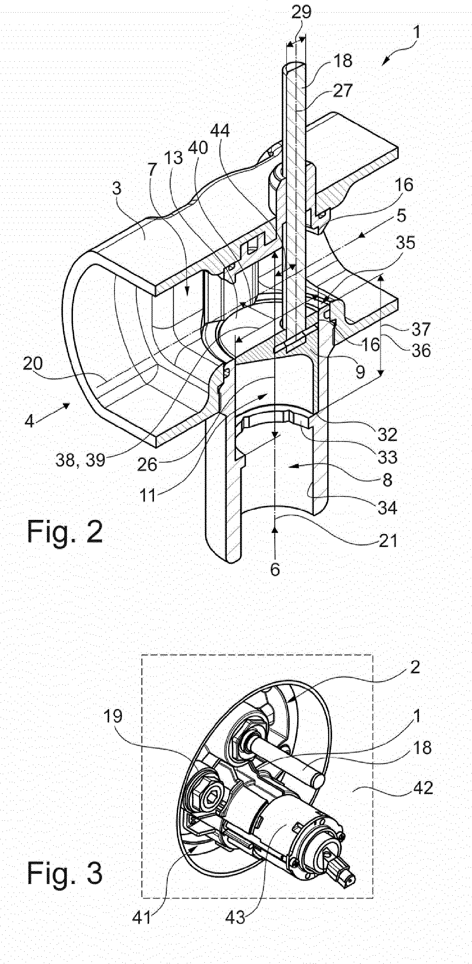

Das Umstellventil 1 weist einen Ventilkörper 9 auf, der mithilfe eines Betätigungselements 18 entlang eines Stellwegs 26 zwischen einer in der Fig. 1 gezeigten ersten Schließstellung 10 und einer in der Fig. 2 gezeigten zweiten Schließstellung 11 verstellbar ist. Das Betätigungselement 18 ist hier nach Art einer (geraden) Betätigungsstange ausgebildet und erstreckt sich entlang einer dritten Längsachse 27, die parallel zu der zweiten Längsachse 21 des zweiten Flüssigkeitskanals 8 verläuft. Weiterhin weist das Betätigungselement 18 eine Länge 28 und einen Durchmesser 29 auf. Zudem ist das Betätigungselement 18 parallel zu der dritten Längsachse 27 in einer Führung 30 bewegbar gelagert. Der Ventilkörper 9 ist nach Art eines Kolbens ausgebildet und weist an einem ersten längsseitigen Ende 31 eine Stirnfläche 13 auf, die orthogonal zu der zweiten Längsachse 21 des zweiten Flüssigkeitskanals 8 ausgebildet ist. In der ersten Schließstellung 10 ist der Ventilkörper 9 so weit aus dem zweiten Flüssigkeitskanal 8 herausbewegt, dass die Stirnfläche 13 des Ventilkörpers 9 (plan) an einer ersten Innenwand 15 des ersten Flüssigkeitskanals 7 anliegt und eine Umfangsfläche 12 des Ventilkörpers 9 den ersten Flüssigkeitskanal verschließt. Hierdurch blockiert der Ventilkörper 9 einen gesamten Strömungsquerschnitt des ersten Flüssigkeitskanals 7, sodass eine über den Flüssigkeitszulauf 4 zuströmende Flüssigkeit nicht über den ersten Flüssigkeitsablauf 5 abfließen kann. In der ersten Schließstellung 10 kontaktiert die Umfangsfläche 12 des Ventilkörpers 9 einen ersten Ventilsitz 16 des ersten Flüssigkeitskanals 7, der sich ringförmig um die erste Längsachse 20 des ersten Flüssigkeitskanals 7 bzw. um 360° um die erste Längsachse 20 des ersten Flüssigkeitskanals 7 entlang der ersten Innenwand 15 des ersten Flüssigkeitskanals 7 erstreckt. Innerhalb des Ventilkörpers 9 ist eine Umlenkkontur 17 ausgebildet, durch die die von dem Flüssigkeitszulauf 4 zuströmende Flüssigkeit (vollständig) in Richtung des zweiten Flüssigkeitskanals 8 bzw. in Richtung des zweiten Flüssigkeitsablaufs 6 umlenkbar ist. Die Umlenkkontur 17 ist konkav und nach Art einer Ausnehmung des Ventilkörpers 9 ausgebildet.

Die Fig. 2 zeigt das Umstellventil 1, nachdem der Ventilkörper 9 durch Hereindrücken des Betätigungselements 18 in das Ventilgehäuse 3 entlang des Stellwegs 26 in den zweiten Flüssigkeitskanal 8 hineinbewegt wurde, bis dass sich der Ventilkörper 9 in der zweiten Schließstellung 11 befindet. Bei der Bewegung des Ventilkörpers 9 entlang des Stellwegs 26 wird der Ventilkörper 9 durch eine zweite Innenwand 34 des zweiten Flüssigkeitskanals 8 parallel zu dem ersten Ventilsitz 16 des ersten Flüssigkeitskanals 7 geführt. Hierzu weist der Ventilkörper 9 (im Bereich der Stirnfläche 13) einen Ventilkörperdurchmesser 38 auf, der (im Wesentlichen) einem zweiten Innendurchmesser 39 des zweiten Flüssigkeitskanals 8 entspricht. In der zweiten Schließstellung 11 kontaktiert ein zweites längsseitiges Ende 32 des Ventilkörpers 9 einen Ventilkörpersitz 33 des zweiten Flüssigkeitskanals 8. Der Ventilkörpersitz 33 ist ringförmig an einer zweiten Innenwand 34 des zweiten Flüssigkeitskanals 8 ausgebildet und blockiert eine weitere Bewegung des Ventilkörpers 9 in Richtung des zweiten Flüssigkeitsablaufs 6. Weiterhin ist der Ventilkörpersitz 33 in dem zweiten Flüssigkeitskanal 8 ausgehend von einem dritten längsseitigen Ende 35 des zweiten Flüssigkeitskanals 8 mit einer Tiefe 36 ausgebildet, die einer Ventilkörperlänge 37 des Ventilkörpers (parallel zu der zweiten Längsachse 21) entspricht. In der zweiten Schließstellung 11 verschließt die Stirnfläche 13 des Ventilkörpers 9 den zweiten Flüssigkeitskanal 8, sodass keine Flüssigkeit über den zweiten Flüssigkeitsablauf 6 abfließen kann. Weiterhin ist der Ventilkörper 6 in der Schließstellung 11 vollständig aus dem ersten Flüssigkeitskanal 7 herausbewegt, sodass ein erster Innendurchmesser 40 des ersten Flüssigkeitskanals 7 (orthogonal zu der ersten Längsachse 20 des ersten Flüssigkeitskanals 7 und der zweiten Längsachse 21 des zweiten Flüssigkeitskanals 8) nur durch den Durchmesser 29 des Betätigungselements 18 reduziert wird. Die Stirnfläche 13 des Ventilkörpers 9 schließt in der zweiten Schließstellung 11 (im Wesentlichen) bündig mit dem dritten längsseitigen Ende 35 des zweiten Flüssigkeitskanals 8 ab. In der zweiten Schließstellung 11 ist der erste Flüssigkeitskanal 7 durch den Ventilkörper 9 freigegeben, sodass über den Flüssigkeitszulauf 4 zuströmende Flüssigkeit durch den ersten Flüssigkeitskanal 7 zu dem ersten Flüssigkeitsablauf 5 strömen kann. Das Betätigungselement 18 ist exzentrisch an dem Ventilkörper 9 befestigt, wodurch die dritte Längsachse 27 des Betätigungselements 18 zu der zweiten Längsachse 21 des zweiten Flüssigkeitskanals 8 bzw. des Ventilkörpers 9 einen Abstand 44 aufweist. Hierdurch ist verhinderbar, dass sich der Ventilkörper 9 um die zweite Längsachse 21 dreht.

Die Fig. 3 zeigt eine Sanitärarmatur 2, die nach Art eines Unterputzeinbaukörpers ausgebildet und in einer Öffnung 41 einer Gebäudewand 42 angeordnet ist. Die Sanitärarmatur 2 umfasst ein Armaturengehäuse 19 mit einem Mischventil 43 und dem in den Fig. 1 und 2 dargestellten Umstellventil 1, von dem in der Fig. 3 lediglich das Betätigungselement 18 sichtbar ist. Durch das Mischventil 43 sind Kaltwasser und Warmwasser zu einem Mischwasser mit einer gewünschten Mischwassertemperatur mischbar. Anschließend ist das Mischwasser dem in den Fig. 1 und 2 gezeigten Flüssigkeitszulauf 4 des Umstellventils 1 zuführbar. Ein Benutzer der Sanitärarmatur 2 kann durch Hereindrücken oder Herausziehen des Betätigungselements 18 wahlweise den ersten Flüssigkeitsablauf 5 oder zweiten Flüssigkeitsablauf 6 des Umstellventils 1 freigegeben, sodass das Mischwasser entweder einem hier nicht dargestellten und mit dem ersten Flüssigkeitsablauf 5 verbundenen Wanneneinlauf einer Badewanne oder einer hier ebenfalls nicht dargestellten und mit dem zweiten Flüssigkeitsablauf 6 verbundenen Handbrause zuführbar ist.

Durch das vorgeschlagene Umstellventil sind hohe Druckverluste und laute Strömungsgeräusche reduzierbar.

### Bezugszeichenliste

- 1: Umstellventil
- 2: Sanitärarmatur
- 3: Ventilgehäuse
- 4: Flüssigkeitszulauf
- 5: erster Flüssigkeitsablauf
- 6: zweiter Flüssigkeitsablauf
- 7: erster Flüssigkeitskanal
- 8: zweiter Flüssigkeitskanal
- 9: Ventilkörper
- 10: erste Schließstellung
- 11: zweite Schließstellung
- 12: Umfangsfläche
- 13: Stirnfläche
- 14: Winkel
- 15: erste Innenwand
- 16: erster Ventilsitz
- 17: Umlenkkontur
- 18: Betätigungselement
- 19: Armaturengehäuse
- 20: erste Längsachse
- 21: zweite Längsachse
- 22: erstes Gehäuseteil
- 23: zweites Gehäuseteil
- 24: Spalt
- 25: Umgebung
- 26: Stellweg
- 27: dritte Längsachse
- 28: Länge
- 29: Durchmesser
- 30: Führung
- 31: erstes längsseitiges Ende
- 32: zweites längsseitiges Ende
- 33: Ventilkörpersitz
- 34: zweite Innenwand
- 35: drittes längsseitiges Ende
- 36: Tiefe
- 37: Ventilkörperlänge
- 38: Ventilkörperdurchmesser
- 39: zweiter Innendurchmesser
- 40: erster Innendurchmesser
- 41: Öffnung
- 42: Gebäudewand
- 43: Mischventil
- 44: Abstand

## Patentansprüche

1. Umstellventil (1) für eine Sanitärarmatur (2), zumindest aufweisend:
- ein Ventilgehäuse (3) mit einem Flüssigkeitszulauf (4), einem ersten Flüssigkeitsablauf (5) und einem zweiten Flüssigkeitsablauf (6), wobei der Flüssigkeitszulauf (4) über einen ersten Flüssigkeitskanal (7) mit dem ersten Flüssigkeitsablauf (5) und über einen zweiten Flüssigkeitskanal (8) mit dem zweiten Flüssigkeitsablauf (6) verbunden ist; und
- einen Ventilkörper (9), der in dem Ventilgehäuse (3) zwischen einer ersten Schließstellung (10) und einer zweiten Schließstellung (11) verstellbar ist, wobei in der ersten Schließstellung (10) eine Umfangsfläche (12) des Ventilkörpers (9) den ersten Flüssigkeitskanal (7) verschließt und wobei in der zweiten Schließstellung (11) eine Stirnfläche (13) des Ventilkörpers (9) den zweiten Flüssigkeitskanal (8) verschließt.

2. Umstellventil (1) nach Patentanspruch 1, wobei der erste Flüssigkeitskanal (7) und der zweite Flüssigkeitskanal (8) in einem Winkel (14) von 45° bis 135° zueinander verlaufen.

3. Umstellventil (1) nach einem der vorhergehenden Patentansprüche, wobei der erste Flüssigkeitsablauf (5) parallel zu dem Flüssigkeitszulauf (4) und der zweite Flüssigkeitsablauf (6) orthogonal zu dem Flüssigkeitszulauf (4) ausgebildet sind.

4. Umstellventil (1) nach einem der vorhergehenden Patentansprüche, wobei in der ersten Schließstellung (10) die Stirnfläche (13) des Ventilkörpers (9) eine erste Innenwand (15) des ersten Flüssigkeitskanals (7) kontaktiert.

5. Umstellventil (1) nach einem der vorhergehenden Patentansprüche, wobei der Ventilkörper (9) beim Verstellen zwischen der ersten Schließstellung (10) und der zweiten Schließstellung (11) parallel zu einem ersten Ventilsitz (16) des ersten Flüssigkeitskanals (7) bewegbar ist.

6. Umstellventil (1) nach einem der vorhergehenden Patentansprüche, wobei der Ventilkörper (9) beim Verstellen in Richtung der ersten Schließstellung (10) zumindest teilweise aus dem zweiten Flüssigkeitskanal (8) herausbewegt und beim Verstellen in Richtung der zweiten Schließstellung (11) zumindest teilweise in den zweiten Flüssigkeitskanal (8) hineinbewegt wird.

7. Umstellventil (1) nach einem der vorhergehenden Patentansprüche, wobei der Ventilkörper (9) eine Umlenkkontur (17) aufweist, durch die in der ersten Schließstellung (10) des Ventilkörpers (9) eine Flüssigkeit in Richtung des zweiten Flüssigkeitskanals (8) umlenkbar ist.

8. Umstellventil (1) nach einem der vorhergehenden Patentansprüche, wobei der Ventilkörper (9) mit einem Betätigungselement (18) verstellbar ist.

9. Umstellventil (1) nach Patentanspruch 8, wobei das Betätigungselement (18) exzentrisch an dem Ventilkörper (9) befestigt ist.

10. Sanitärarmatur (2), zumindest aufweisend:
- ein Armaturengehäuse (19); und
- ein Umstellventil (1) nach einem der vorhergehenden Patentansprüche, wobei das Umstellventil (1) zumindest teilweise in dem Armaturengehäuse (19) angeordnet ist.
